# EUROPEAN PATENT APPLICATION

(11) **EP 1 787 734 A2**
(43) Date of publication of application: **23.05.2007**
(21) Application number: 06468007.7
(22) Date of filing: 17.11.2006
(51) Int. Cl.: B09C 1/02

(54) **The use of advanced oxidation processes for remediation of heavy metals and radionuclides contaminated soils and sediments in a closed process loop**

(30) Priority: 18.11.2005 SI 200500317
(71) Applicant: Univerza v Ljubljani, 1000 Ljubljana (SI)
(72) Inventor: Lestan, Domen, 1290 Grosuplje (SI); Finzgar, Neza, 4240 Radovljica (SI)
(74) Representative: Pipan, Marjan

(57) **Abstract**

The process of the present invention which relates to "The use of advanced oxidation processes for remediation of heavy metals and radionuclides contaminated soils and sediments in a closed process" solves problems of contaminated soil/sediment. Soil/sediment is excavated and mounded on drainage. Chelating agents in a washing solution are used to wash metals and radionuclides from the soil/sediment as chelate complexes. Supporting compounds in the washing solution remove organic pollutants. Advanced oxidation, preferably ozonation/UV, is used for degradation of complexes and organic pollutants in the washing solution. Released metals/radionuclides are absorbed. The treated washing solution is reused for soil/sediment rinsing in a closed process loop, to remove residual complexes, and as a medium for the chelating agent and supporting compounds in multiple washing steps. Remediated soil/sediment is returned to the original place or deposited. The process saves water, produces no harmful emissions and is gentle to the soil.

## Description

The invention relates to the process "The use of advanced oxidation processes for remediation of heavy metals and radionuclides contaminated soils and sediments in a closed process loop". Contaminated soils and sediments are excavated and mounded to form a heap or are placed into a column. Chelating agents (chelators) in a washing solution are used to leach metals and radionuclides from soils and sediments as water-soluble coordinative compounds (chelate complexes), in a single or several leaching steps. Advanced oxidation, preferably a combination of ozone and UV light, is used to purify the washing solution for reuse in a closed process loop. Simultaneously, organic pollutants are removed from the soils/ sediments and degraded using advanced oxidation processes. The process recycles the process water, thus lowering requirements for process waters, and allows soil/sediment remediation without hazardous emissions into the environment.

In terms of innovation, the process belongs to B09C 1/02 according to the international patent classification.

The main sources of soil and sediment pollution with heavy metals, such as copper, zinc, cadmium, cobalt, chromium, molybdenum, nickel, lead, thallium, vanadium and mercury; with semi-metals such as selenium and arsenic and radionuclides such as uranium and transuranium elements, are industrial and traffic emissions and the use of some phytopharmaceuticals and organic fertilizers in agriculture. Unlike many organic pollutants, metals are not degradable in the environment and radioactive decay of most radionuclides is very slow. The novel process that is the subject of the invention is intended to remediate soils and sediments contaminated with hazardous metals and metallic radionuclides.

### CURENT PROCESSES FOR REMEDIATION OF SOILS AND SEDIMENTS CONTAMINATED WITH HAZARDOUS METALS AND METALLIC RADIONUCLIDES

Current processes for remediation of soils/sediments contaminated with hazardous metals include:
a. Solidification/stabilization of metals in soils and sediments by mixing or injecting agents such as phosphates (U.S. Pat. No. 5,202,033; U.S. Pat. No. 6,204,430), cement, lime or various sulfides (U.S. Pat. No. 4,629,509). These processes do not remove the metals but increase their solid phase share and thus make the metals biologically less accessible.
b. Electro-kinetic processes involve passing a low intensity electric current between a cathode and an anode imbedded in the contaminated soils or sediments. An electric gradient initiates charged particles movement, including metals and radionuclides. The metals/radionuclides can be removed by precipitation at the electrodes.
c. Phytoextraction uses metal hyperaccumulating plants, with a natural ability to uptake some metals (especially nickel and zinc) and accumulate them in their green parts (U.S. Pat. No. 6,313,374). In induced phytoextraction, chelating agents are applied to the soil to increase the availability of metals (particularly lead) and increase phytoextraction efficiency (U.S. Pat. No. 5,917,117).
d. Soil and sediment washing with aqueous washing solutions. A washing solution with chelating agents is most often used. Chelating agents applied to the soil/sediment form water soluble coordinative compounds (complexes) with hazardous metals and metallic radionuclides and in this way transfer metals and metallic radionuclides from the soil solid to the aqueous soil phase, which can be then removed from the soil/sediment. Known are Processes are known in which synthetically chelating agents, such is ethylenediamine tetraacetic acid (EDTA) are used (JP Pat. No. 2004-066129; Mulligan, C.N., R.N. Yong, B.F. Gibbs. Remediation technologies for metal-contaminated soils and groundwater: an evaluation. Eng. Geology, 2000, 60, pp. 193-207). In other known processes, washing solutions with chelating agents of natural origin are used (U.S. Pat. No. 5,849,567). In other known processes, washing solutions with mineral and organic acids are used to lower soil pH and thus enhance the solubility of hazardous metals in soil (U.S. Pat. No. 5,919,001). In other known processes, water solutions of salts are used to form water-soluble salts with anions and hazardous metals, which are then washed from the soil/sediment (U.S. Pat. No. 5,744,107). Washing of soils/sediments contaminated with hazardous metals and radionuclides is an *ex situ* remediation process. Soils or sediments are excavated and transferred to specially designed equipment, in which they are washed with water solutions (DE Pat. No. 4322100). In another known soil washing process, hazardous metals are leached from the soil heap (U.S. Pat. No. 5744107). Heap leaching preserves the soil structure and is regarded as a soil "gentle" remediation process. After soil washing, the washing solution is separated from the soil/sediment and the cleaned soil/sediment returned to the site of excavation, or safely deposited. Soil washing generates large volumes of waste washing solution, saturated with complexes containing hazardous metals or radionuclides. There are several known processes that separate hazardous metals from their complexes with chelating agents and from the washing solution. In precipitation processes, the pH of the washing solution is altered to initiate the decay of complexes and precipitation of released metals as insoluble salts, i.e. sulfides (JP Pat. No. 4263874). A transcomplexation process was introduced to treat the washing solution with complexes of ethylenediamine tetraacetate (EDTA) and Pb. After soil washing, the pH of the washing solution is reduced and Pb in EDTA complex exchanged with Fe³⁺. The released Pb is precipitated from the washing solution as insoluble phosphate or sulfide salt. Fe is subsequently released and precipitated from EDTA complexes by raising the pH of the washing solution. The process enables partial EDTA recycling (Kim, C., Ong, S-K. Recycling of lead-contaminated EDTA wastewater. J. Hazard. Mater., 1999, B69, pp. 273-286). In yet another known process, the washing solution with Pb and Cu EDTA complexes is evaporated to 75% of its initial volume. The rest of the solution is acidified, which leads to precipitation of 90% of EDTA complexes (Di Palma, L., Ferrantelli, P., Merli, C., Biancifiori, F.J. Recovery of EDTA and metal precipitation from soil flushing solutions. J. Hazard. Mater., 2003, B103, pp. 153-168). Decreasing the washing solution initial volume and subsequent acidification of the residual solution is also achievable by using reverse-osmosis (Di Palma, L., Ferrantelli, P., Merli, C., Petrucci, E. Treatment of the solution extracted from metal contaminated soils by reverse osmosis and chemical precipitation. Annali Chim., 2003, 93, pp. 1005-1011). In another known process, EDTA complexes with hazardous metals are removed from the washing solution by absorption on an anion-exchange resin (Tejowulan, R.S., Hendershot, W.H. Removal of trace metals from contaminated soils using EDTA incorporating resin trapping techniques. Environ. Pollut., 1998, 103, pp. 135-142). In another known process, an electrolytic chamber in which the electrodes were separated by a cation exchange membrane, was used to separate Pb and Cu from their EDTA complex and from the washing solution (Juang, R.S., Wang, S.W. Electrolytic recovery of binary metals and EDTA from strong complexed solutions. Water Res., 2000, 34, pp. 3179-3185).

Among remediation processes for soils and sediments contaminated with hazardous metals and metallic radionuclides, soil washing processes using water solutions with chelating agents are the most similar to the process according to our invention. The main characteristics that distinguish the process according to our invention from known processes, are:
a. The process according to our invention produces no hazardous emissions into the environment.
b. In the process according to our invention, the washing solution is recycled and the use of process water thus reduced.
c. After the process according to our invention, the waste washing solution does not contain hazardous metals or metallic radionuclides, chelating agents, surfactants, detergents, solvents, and organic pollutants.
d. In the process according to our invention, hazardous metals or metallic radionuclides are released from the complexes with the chelating agent after degradation of complexes using advanced oxidation processes. Released metals or radionuclides are separated from the washing solution.
e. In the process according to our invention, in addition to chelating agents the washing solution comprises surfactants, detergents and other supporting materials, which increase the efficiency of extraction of hazardous metals and metallic radionuclides from the soil/sediment, and enable simultaneous removal of organic pollutants from contaminated soils/sediments.
f. The efficiency of extraction of hazardous heavy metals and metallic radionuclides can be enhanced by ozonation of contaminated soils/sediments before the process according to our invention. *In situ* ozonation chemically degrades organic pollutants in the soils/sediments.

In the process according to our invention, advanced oxidation is used for cleaning waste washing solution contaminated with chelating agents, their metal complexes and organic pollutants. In another known process, advanced oxidation using ozone and peroxide is used to treat wastewaters infested with metallic complexes of EDTA and nitrilotriacetate (NTA), generated in the photo-industry (U.S. Pat. No. 4332687). In another known process, advanced oxidation is used to remove chelating agents metal complexes from wastewaters generated in thermal and nuclear power plants (JP Pat. No. 9047751). The purpose of use and the design of advanced oxidation processes used in the process according to our invention differ from known processes described above. The main distinguishing differences are:
a. In the process according to our invention, advanced oxidation processes are used in remediation of contaminated soils and sediments, and not for treatment of contaminated wastewaters generated from various industries.
b. In the process according to our invention, advanced oxidation processes are used in the process that itself generates contaminated process waters (washing solution).
c. In the process according to our invention, the use of advanced oxidation processes enables treatment of the washing solution used for soil/sediment washing in a closed process loop.

In known processes, advanced oxidation processes are used for remediation of soils predominantly contaminated with organic pollutants. In a known process, an advanced oxidation process is used for *in situ* chemical degradation of organic pollutants (JP Pat. No. 6238260; U.S. Pat. No. 2003-017004). In another known process, the soils are excavated, mounded into a heap and organic pollutants in the heap degraded with advanced oxidation processes (U.S. Pat. No. 5753494). In another known process, organic pollutants are removed from the soil with solvents and then pollutants and solvents are degraded using advanced oxidation (JP Pat. No. 2005-066442). The process according to our invention differs from the above-described processes in the construction and operational design, and in its purpose for remediation of soils and sediments predominantly contaminated with hazardous metals and metallic radionuclides.

### DESCRIPTION OF THE PREFFERED IMBODIMENT OF THE INVENTION

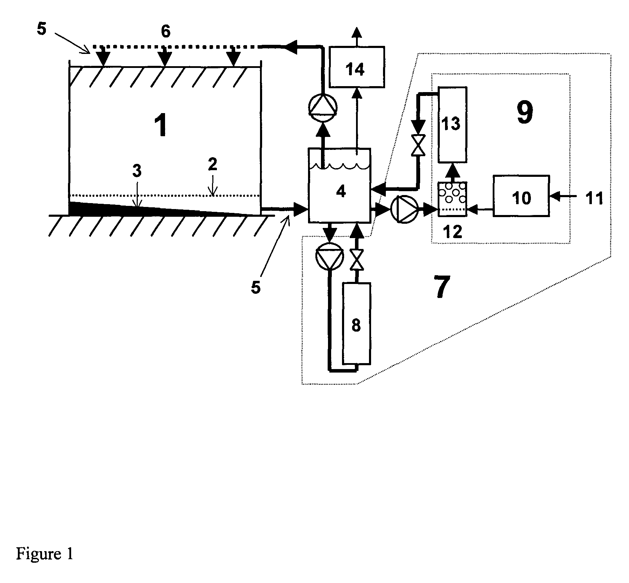

Compact materials such as stones are separated from the contaminated soil/sediment. Materials that one skilled in the art would know enhance hydraulic conductivity, e.g., sand, can be mixed into the soil/sediment. Contaminated soil/sediment (1) is mounded on a drainage system, build with a slight inclination (2), and separated from the ground with non-permeable material (e.g.,. geotextile, plastic foil) (3) (Figure1). The drainage system is connected to the washing solution collection vessel (4). The volume of the collection vessel is between 0.5-20% of the volume of the washing solution used in process. The volume of the washing solution is between 105 - 200 % of the field water holding capacity of the soil/sediment. The soil/sediment is mounded on top of a drainage system, 0.3-4 m high (2). In the preferred embodiment the soil/sediment mound is enclosed. The height of the mound depends on the soil/sediment hydraulic conductivity. The layout and the volume of the mound depend on the capacity of the apparatus for treatment of the washing solution (7).

The collection vessel (4) is connected to the washing solution irrigation system (6) on top of the mound by means of pipes and pumps, in such a way as to enable the circulation of the washing solution through the soil/sediment in a closed process loop (Figure 1). The connection permits:
a. direct connection of the collection vessel (4) and irrigation system (6),
b. connection of the collection vessel (4) and irrigation system (6) through apparatus for washing solution treatment (7).

Washing soil/sediment (1) contaminated with hazardous metals and metallic radionuclides according to our invention is a single or multi-step process. Each step consists of two phases. In the first phase, the hazardous metals and metallic radionuclides are extracted from the soil/sediment solid phase into a washing solution. The washing solution (5) contains chelating agents, which form water-soluble complexes with metals and metallic radionuclides, and supporting compounds. The concentration of chelating agent or mixture of chelating agents ranges between 0.5 - 50 mmol kg⁻¹ of soil/sediment. In the first step, the washing solution (5) is transferred from the drainage (2) via the collecting vessel (4) directly to the irrigation system (6) on top of the mound. The flow rate of the washing solution is adjusted to hydraulic conductivity of the soil/sediment to prevent retention and flow-off of the washing solution from the top of the mound. The end of the first phase is characterized by a concentration of hazardous metals and metallic radionuclides in the washing solution which is no longer increasing. The time needed for the conclusion of the first phase depends greatly on the soil/sediment and contamination type, soil/sediment hydraulic conductivity, height of the mound and concentration of chelating agents, and could take from 1 hour to several days.

The end of the first phase marks the beginning of the second phase. In the second phase, the washing solution (5) is transferred from the collecting vessel (4) to the irrigation system (6) via apparatus for treating the washing solution (7). In the apparatus for washing solution treatment (7) metals, radionuclides, chelating agents, supporting compounds and organic pollutants are removed from the washing solution (5). Treated washing solution is reused in a closed process loop to remove all mobile metal and radionuclide complexes residual in the soil/sediment after the first phase. The second phase can take from 1 hour to several days. The time needed for the conclusion of the second phase depends greatly on the soil/sediment and contamination type, soil/sediment hydraulic conductivity, and heighs of the mound and concentration of chelating agents. The end of the second phase is characterized by a decrease in the concentration of metals, radionuclides, chelating agents and organic pollutants in the washing solution to 0-10% of the concentration at the end of the first phase (or beginning of the second phase).

If the soil/sediment is washed in more than one step, then each new step is characterized by the addition of new chelating agent, mixture of chelating agents and supporting compounds into the washing solution, after the second phase of the previous step. Each new step begins with the first phase, as described above.

The end of the soil/sediment washing with the process according to our innovation is characterized by the reduction of the concentration of hazardous metals and metallic radionuclides in the soil/sediment below the planned target concentration, achievable in one or multiple washing steps. The second phase of the last washing step could be prolonged until the concentrations of hazardous metals, metallic radionuclides, chelating agents and other organic pollutants decrease below the level that permits safe release of treated waste washing solution into the environment at the end of the process. Absorbent (8), saturated with hazardous metals and metallic radionuclides is safely deposited or used as an ore and commercially interesting metals recycled. Remediated soil/sediment is returned to the original site or used otherwise.

### Washing solution

For the preparation of the washing solution (5), the chelating agent or mixture thereof, which one skilled in the art would know form water soluble complexes with hazardous metals and radionuclides, is dissolved in water. The chelating agent is selected from, but not limited to: ethilenediamin tetraacetate (EDTA), trans-1,2-diaminocyclohexane-N,N,N;N'-tetraacetate (CDTA), diethylentriamine pentaacetate (DTPA), ethylenediamine dissuccinate (EDDS), nitrilotriacetate (NTA), N-hydroxyethylethylendiamine triacetate (HEDTA), ethylenbis(oxyethlenetrinithrilo)-*N,N,N',N*' tetraacetate (EGTA), citrate.

The pH of the washing solution (5) can be adjusted with acids or bases before or during the process to increase the efficiency of extraction of hazardous metals and metallic radionuclides from the soil/sediment. The washing solution can also be amended with supporting compounds selected from, but not limited to: surfactants, emulgators, detergents (i.e. Tween 80, Tween 20, Triton X100) and solvents which one skilled in the art would know enhance the extraction of hazardous metals and metallic radionuclides, as well as various organic pollutants from dual contaminated soils/sediments. Organic pollutants in the washing solution (5) are chemically degraded using advanced oxidation processes in the apparatus for washing solution treatment (7).

### Apparatus for treatment of the washing solution

The apparatus for washing solution treatment (7) is composed of a unit for advanced oxidation and degradation of metal and radionuclide complexes with chelating agents and organic pollutants in the washing solution, and a unit for absorption of released metals and radionuclides from the washing solution. Preferably, the two units are connected to the collecting vessel (4) as shown in Figure 1, or are connected to the collecting vessel (4) serially. If the units are connected serially, then the unit for advanced oxidation (9) is before the absorption unit (8). A combination of ozone and UV-light is preferably used for advanced oxidation of the washing solution. Ozone is generated in the ozonator (10) from atmospheric oxygen, from atmospheric oxygen after oxygen concentration, or directly from an oxygen tank (11). Ozonators and apparatus for oxygen concentration and moisture removal of different capacity are commercially available (e.g., from Lenntech, Delft, Netherlands; Hydroxyl Systems Inc., Victoria, Canada; Crystal Air, Surrey, British Columbia, Canada). The washing solution (5) is ozonated with ozone in a stream of air or oxygen with a diffuser or Venturi injector (12). The capacity of the ozonator should allow for a concentration of ozone in the washing solution between 0.1 in 30 mg L⁻¹. Ozonated washing solution flows through a housing with a UV-light source, with power between 50 - 50000 W. UV irradiation triggers the formation of very reactive hydroxyl radicals. These radicals oxidize and degrade complexes of metals and radionuclides with chelating agents and thus release metals and radionuclides. Simultaneously, hydroxyl radicals degrade organic pollutants in the washing solution. UV-lights in flow-though housings are commercially available from various producers (e.g., Heraeus, Hanau, Germany; SteriBeam Systems, Kehl/am Rhein, Germany). In an alternative embodiment of the process according to our invention, another advanced oxidation process can be used in the apparatus for washing solution treatment (7). These include, but are not limited to different combinations of ozone, hydrogen peroxide (H₂O₂), UV-light, sonification, Fe²⁺, and electrochemical advanced oxidation processes, known to one skilled in the art.

Released metals and radionuclides generated through complexes decay in the advanced oxidation unit (9), are absorbed from the washing solution by passing washing solution through the absorption unit (8). The absorption unit consists of appropriate housing, flow-through column or filter (specially designed and manufactured or commercially available from various producers), filled with filling material. Filling material is selected from different materials which one skilled in the art would know immobilize metals and radionuclides by absorption, by forming insoluble complexes or salts, or cause precipitation. Such materials can be selected from, but are not limited to: apatite minerals, sulfides, different clays (i.e. kaolinite, montmorilonite), aluminum and iron (hydrous) oxides, diatomaceous earths, zeolites or different commercially available absorbent formulations prepared for removal of metals from contaminated waters (i.e. Slovakite).

Ozone generated in the ozonator (10) can be used before soil/sediment washing to ozonate the mounted soil/sediment (1). It is known from the scientific literature that soil/sediment ozonation can improve the efficiency of metal and radionuclide extraction with chelating agents (Letan, D., Hanc, A., Fingar N. Influence of ozonation on extractability of Pb and Zn from contaminated soils. Chemosphere, 2005, 61, pp. 1012-1019; Plaue, J.W., Czerwinski, K.R. The influence of ozone on ligand-assisted extraction of 239Pu and 241Am from Rocky Flats soil. Radiochim. Acta, 2003, 91, pp. 309-313). It is also known from the literature that treatment of soil/sediment with molecular ozone enables *in situ* degradation of some organic pollutants (Masten, J.S., Davies, S.H.R. Efficacy of in-situ ozonation for the remediation of PAH contaminated soils. J. Contam. Hydrol., 1997, 28, pp. 327-335).

### Materials

The apparatus and pipelines required in the process according to the invention require the use of materials resistant to strong oxidants, such as ozone and hydroxyl radicals. Resistant materials include, but are not limited to: stainless steel, aluminum, brass, glass, Teflon, silicone, Durlon 9000, polycarbonate plastic. Pumps with pumping parts resistant to chemically aggressive media or peristaltic pumps should be used for pumping media containing ozone and hydroxyl radicals.

### Emissions

The second phase of the last washing step can be prolonged until the concentrations of hazardous metals, metallic radionuclides, chelating agents and other organic pollutants decrease below the level that permits safe release of the treated waste washing solution into the environment at the end of the process. Since the soil/sediment washing using the process according to the invention is a closed-loop process, there are no other emissions of hazardous metals, metallic radionuclides, chelating agents and other pollutants. Gaseous emission of ozone does not represent a threat to the environment. The ozone is degraded relatively quickly in the environment, in 30 - 60 min, into molecular oxygen. If the soil/sediment remediation process is situated in an urban environment, the ozone from the process can be quenched by passing the ozone enriched gas from the collecting vessel (4) through the filter with activated carbon, or solution of potassium iodide, or other material which one skilled in the art would know promotes the quenching of ozone.

### EXAMPLES

### EXAMPLE 1

The feasibility and efficiency of the process according to the invention "The use of advanced oxidation processes for remediation of heavy metals and radionuclides contaminated soils and sediments in a closed process loop" was demonstrated in an experiment with soil columns. We measured the amount of Pb and Zn washed from the soil and accumulated in the absorbent after 6-step soil washing with EDTA solution. The concentrations of Pb, Zn, Ca, Fe and EDTA in the final waste washing solution were also measured.

### Experimental set up

Soil contaminated with Pb and Zn was collected from the upper 15 cm surface layer of an abandoned vegetable garden in the Mezica Valley in the northeastern part of Slovenia. Soils in the valley have been exposed to centuries of lead mining and smelting. The soil was sandy loam in texture and contained 1243±68 mg kg⁻¹ of Pb and 1190±116 mg kg⁻¹ of Zn.

Soil washing in a closed process loop was simulated in triplicate in 15 cm diameter soil columns, filled with 4.6 kg of air-dried soil sieved through a 5 mm mesh sieve. The ozone was generated using a commercial ozonator (V-4, Crystal Air, Surrey, British Columbia) from pure oxygen from the gas tank. The washing solution was ozonated through a diffuser; the concentration was lower than 15 mg of ozone L⁻¹. The ozonated washing solution flowed through a housing with a 320 mm long UV light (8 W, model MK-8, Lenntech, Delft, Netherlands). Metals, released after advanced oxidation of Pb-EDTA complexes with ozone/UV were absorbed from the washing solution in 50 g of commercial absorbent Slovakite (IPRES, Bratislava, Republic of Slovakia) positioned in the flow-through column.

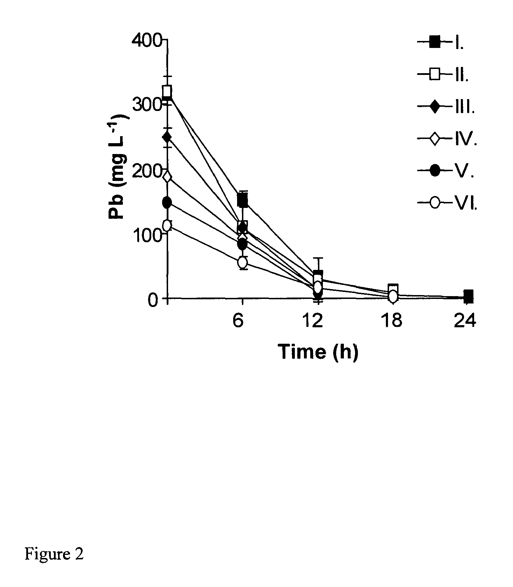

Soils were washed in six steps. In each step, 2.5 mmol kg⁻¹ EDTA in 3100 mL of washing solution was used. In the first phase of each washing step, the soil in the columns was treated with washing solution for 48 h, using a peristaltic pump (14 mL min⁻¹) to force circulation. In the second phase, the washing solution was circulated through the soil and also through the apparatus for washing solution treatment (with the ozone/UV unit and the absorption unit). The washing solution was sampled at 4 hourly intervals. After 12-24 hours of the second phase, the concentration of Pb in the washing solution decreased below 5% of the Pb concentration at the beginning of the second phase (Figure 2). This marked the beginning of the first phase of the next washing step. The washing solution was supplemented with new 2.5 mmol kg⁻¹ EDTA, and with tap water (approx. 10% of the initial volume) to compensate for the water lost during the process, and soils in the columns were treated for the next 48 hours.

### Results

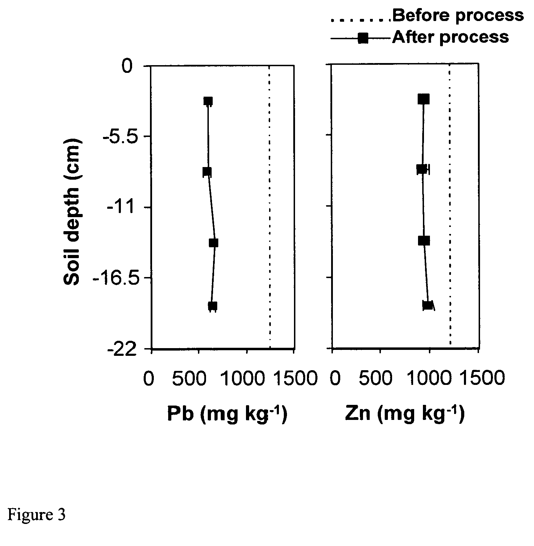

After 6 washing steps (altogether 15 mmol kg⁻¹ of EDTA was used) 49.6±0.6 Pb and 19.9±1.7% of Zn was removed from the soil, uniformly through the soil profile (Figure 3). The concentrations of Pb and Zn in the final waste washing solution were low, 1.98±2.17 and 4.55±2.36 mg L⁻¹. The pH of the waste washing solution was 7.45±0.04. The concentration of EDTA in the waste washing solution was also low: 0.05±0.04 mM. EDTA forms strong complexes also with Fe and Cu and thus promotes their leaching into the washing solution. The concentration of Fe in the waste washing solution was lower than 1 mg L⁻¹, while the concentration of Ca exceeded 100 mg L⁻¹ (the concentration of Ca in the tap water used for preparation of the washing solution was 85.3 mg L⁻¹).

### EXAMPLE 2

The feasibility and efficiency of the process according to invention was demonstrated using soil contaminated with Cu. We measured the amount of Cu washed from contaminated soil and accumulated in the absorbent after single-step soil washing with a solution containing [S,S] isomer of EDDS as a chelating agent.

### Experimental set up

Soil contaminated with Cu (412 ± 11 mg kg⁻¹) was collected from the upper 15 cm surface layer of vineyard soil in the southwestern part of Slovenia. The soil texture was silty-clay loam.

Soil washing in a closed process loop was simulated in triplicate in 15 cm diameter soil columns, filled with 4.6 kg of air-dried soil sieved through a 5 mm mesh sieve. The ozone was generated using a commercial ozonator (V-4, Crystal Air, Surrey, British Columbia) from pure oxygen from a gas tank. The washing solution was ozonated through a diffuser; the concentration was lower than 15 mg of ozone L⁻¹. Ozonated washing solution flowed through housing with a 320 mm long UV light (8 W, model MK-8, Lenntech, Delft, Netherland). Metals, released after advanced oxidation of Cu-EDTA complexes with ozone/UV, were absorbed from the washing solution in 50 g of commercial absorbent Slovakite (IPRES, Bratislava, Republic of Slovakia) positioned in the flow-through column.

Soils were washed in a single step with 5 mmol kg⁻¹ [S,S] EDDS in 2400 mL of the washing solution. In the first phase, the washing solution was circulated through the soil for 24 hours using a peristaltic pump (14 mL min⁻¹). In the second phase, the washing solution was circulated through the soil and also through the apparatus for washing solution treatment (with an ozone/UV unit and an absorption unit).

### Results

Using the process according to the invention, 47.5±7.4% of initial total Cu was removed from the soil with 5 mmol kg⁻¹ [S,S]-EDDS. The concentration of Cu in the final waste washing solution was 2.6±0.7 mg L⁻¹. The waste washing solution was clear and colorless and had completely lost its initial intensive blue-green color.

### DESCRIPTION OF DRAWINGS

Figure 1.
   Scheme of the preferred embodiment of the process according to the invention "The use of advanced oxidation processes for remediation of heavy metals and radionuclides contaminated soils and sediments in a closed process loop". Soil/sediment (1), drainage (2), non-permeable material (3), washing solution collection vessel (4), washing solution (5), washing solution irrigation system (6), apparatus for washing solution treatment (7), absorption unit (8), advanced oxidation unit (9), ozonator (10), source of oxygen (11), ozone diffuser (12), flow-through housing with UV light (13), ozone quenching unit (14).
Figure 2.
   Concentration of Pb in washing solution (Example 1). The concentration was measured during the second phase of all six washing steps (I. - VI.). Error bars represent standard deviation from the mean value (n = 3).
Figure3.
   Pb concentration through the soil profile in soil column before (dotted line) and after (solid line) soil washing using the process according to the invention (Example 1). Error bars represent standard deviation from the mean value (n = 3).

## Claims

1. The process "The use of advanced oxidation processes for remediation of heavy metals and radionuclides contaminated soils and sediments in a closed process loop"
is **characterized in that**,
contaminated soil/sediment is excavated, gravel separated, and soil/sediment mounded 30 do 400 cm high (1) on a drainage system (2).

2. The process according to claim 1
is **characterized in that**
hazardous metals and metallic radionuclides are removed from contaminated soil/sediment (5), and the volume of washing solution is between 105 - 200 % of the field water holding capacity of soil/ sediment.

3. The process according to claim 2
is **characterized in that**
the water solution of chelating agents and mixtures thereof: EDTA, CDTA, DTPA, EDDS, NTA HEDTA, EGTA and citrate with a concentration between 0.5 - 50 mmol kg ¹ of soil/sediment is used as a washing solution, and the pH of washing solution before and after the process can be modified by acid or base addition.

4. The process according to claims 2 and 3
is **characterized in that**
the washing solution can be amended with different supporting compounds such as surfactants, emulgators, detergents, and solvents.

5. The process according to claims 1, 2, 3 and 4
is **characterized in that**
the process proceeds in two phases.

6. The process according to claim 5
is **characterized in that**
in the first phase of the process the washing solution (5) is circulated from drainage (2) on the bottom of the soil/sediment mount, via the washing solution collection vessel (4), directly to the washing solution irrigation system on the top of the mound (6), until the concentration of hazardous metals and radionuclides in the washing solution ceases to increase, which characterizes the end of the first and the beginning of the second phase of the process.

7. The process according to claims 5 and 6
is **characterized in that**
in the second phase of the process the washing solution is circulated from drainage (2) via the washing solution collection vessel (4), via apparatus for washing solution treatment (7) to the irrigation system (6), until the concentration of metals, radionuclides, chelating agents and other pollutants decreases to 0-10% of the concentration at the beginning of the second phase, which characterizes the end of the second phase of the process.

8. The process according to claim 7
is **characterized in that**
the apparatus for washing solution treatment (7) consists of a unit for advanced oxidation of metal and radionuclide complexes with chelating agents and washed organic pollutants (9), and a unit for absorption of released metals and radionuclides (8).

9. The process according to claim 8
is **characterized in that**
for advanced oxidation a combination of ozone and UV-light is preferably used.

10. The process according to claim 9
is **characterized in that**
ozone is produced in an ozonator (10) from atmospheric oxygen or from oxygen from a gas tank, where the gas phase enriched with ozone is introduced into the washing solution (5) via a diffuser or Venturi injector (12) to achieve an ozone concentration in the washing solution between 0.1 in 30 mg O₃ L⁻¹.

11. The process according to claim 9
is **characterized in that**
after ozonation the washing solution (5) flows through a housing with a source of UV-light (13), and the electrical power of the UV-light is between 50 in 50000 W.

12. The process according to claim 8
is **characterized in that**
for advanced oxidation separately or any combination of ozone, hydrogen peroxide (H₂O₂), UV-light, sonification, Fe²⁺, and electrochemical advanced oxidation processes can be used.

13. The process according to claim 8
is **characterized in that**
released metals and radionuclides are absorbed from the washing solution (5) on absorbents in an absorption unit (8), and the absorbent can be selected from materials such as apatites, sulphides, various clays, aluminum and iron (hydrous) oxides, diatomaceous earths, zeolites or various commercially available absorbent formulations prepared for the removal of metals from contaminated waters (i.e. Slovakite).

14. The process according to claims 2, 3, 4 in 5
is **characterized in that**
first and second phases of the process according to the invention can be repeated in one or multiple steps, whereby the first phase of the new step is **characterized by** the addition of chelating agent or a mixture thereof, and optionally also supporting compounds, to the washing solution after the end of the second phase of the previous step.

15. The process according to claims 2, 3, 4, 5 in 14
is **characterized in that**
the end of the process according to invention is **characterized by** a reduction of the concentration of hazardous metals, metallic radionuclides and organic pollutants in the soil/sediment below the planned target concentration, in one or multiple washing steps.

16. The process according to claim 15
is **characterized in that**,
at the end of the process according to the invention, the remediated soil/sediment is returned to the original place, safely deposited or used otherwise, the final waste washing solution, with low and safe concentrations of hazardous metals, radionuclides, chelating agents and organic pollutants released into environment, and absorbed, saturated with hazardous metals and metallic radionuclides, is safely deposited or used as an ore.
